# EUROPÄISCHE PATENTANMELDUNG

(11) **EP 1 284 206 A1**
(43) Veröffentlichungstag der Anmeldung: **19.02.2003**
(21) Anmeldenummer: 02025901.6
(22) Anmeldetag: 27.04.2000
(51) Int. Cl.: B60D 1/06, B60D 1/28

(54) **Kupplungsvorrichtung zwischen einem Zugfahrzeug, insbesondere einem Ackerschlepper, und einem Anhänger**

(30) Priorität: 30.04.1999 AT 77899
(62) Teilanmeldung aus: 00926521.6
(71) Anmelder: Scharmüller, Josef, A-4870 Vöcklamarkt (AT)
(72) Erfinder: Scharmüller, Josef, A-4870 Vöcklamarkt (AT)
(74) Vertreter: Gibler, Ferdinand, Dipl.Ing. Dr. techn.

(57) **Zusammenfassung**

Kupplungsvorrichtung zwischen einem Zugfahrzeug, insbesondere einem Ackerschlepper, und einem Anhänger mit einer auf einem Kupplungsträger (1) des Zugfahrzeuges angeordneten Kupplungskugel (6) und einer die Kupplungskugel (6) von oben umfassenden, anhängerseitigen Kugelpfanne (8), wobei ein in einen Lagerbock (12) um eine Achse (13) verschwenkbarer und in einer Kupplungsstellung verriegelbarer Niederhalter (14) vorgesehen ist.

## Beschreibung

Die Erfindung bezieht sich auf eine Kupplungsvorrichtung zwischen einem Zugfahrzeug, insbesondere einem Ackerschlepper, und einem Anhänger mit einer auf einem Kupplungsträger des Zugfahrzeuges angeordneten Kupplungskugel und einer die Kupplungskugel von oben umfassenden, anhängerseitigen Kugelpfanne.

Kupplungsvorrichtungen mit einer dem Zugfahrzeug zugeordneten Kupplungskugel und einer an der Deichsel des Anhängers vorgesehenen, die Kupplungskugel von oben umfassenden Kugelpfanne erlauben ein An- und Abkuppeln des Anhängers bei vergleichsweise großen Schwenkwinkeln zwischen der Deichsel und der Längsachse des Zugfahrzeuges. Die möglichen Schwenkbewegungen der Kugelpfanne gegenüber der Kupplungskugel sowohl um eine vertikale als auch um eine horizontale Schwenkachse stellen außerdem vorteilhafte Voraussetzungen für Geländefahrten sicher. Dazu kommt ein durch die Selbstzentrierung der Kugelpfanne vereinfachter Kuppelvorgang, so daß sich aufgrund dieser Eigenschaften der Einsatz solcher Kupplungsvorrichtungen beispielsweise für landwirtschaftliche Fahrzeuge anböte, wenn die über diese Kupplungsvorrichtungen aufnehmbaren Stütz- und Anhängerlasten nicht auf ein Maß beschränkt wären, das einen solchen Einsatz verbietet. Um die Belastbarkeit der üblicherweise tiefgezogenen Kugelpfannen zu verbessern, wurde bereits vorgeschlagen, den Kugeldurchmesser erheblich zu vergrößern, doch bedingen für die Übernahme hoher Stütz- und Anhängelasten ausreichend große Kugeldurchmesser Sonderkonstruktionen, die den Einsatzbereich dieser Kupplungsvorrichtungen auf Sonderfahrzeuge beschränkt.

Der Erfindung liegt somit die Aufgabe zugrunde, eine Kupplungsvorrichtung zwischen einem Zugfahrzeug, insbesondere einem Ackerschlepper, und einem Anhänger der eingangs geschilderten Art so auszugestalten, daß ein unbeabsichtigtes Abheben der Kugelpfanne verhindert wird und daß große Stütz- und Anhängelasten aufgenommen werden können.

Die Erfindung löst die gestellte Aufgabe dadurch, daß ein in einen Lagerbock um eine Achse verschwenkbarer und in einer Kupplungsstellung verriegelbarer Niederhalter vorgesehen ist.

In Weiterbildung der Erfindung kann vorgesehen sein, daß der Niederhalter mit einer Stecksicherung in der Kupplungsstellung sicherbar ist.

In weiterer Ausgestaltung der Erfindung kann vorgesehen sein, daß der Lagerbock mit dem Kupplungsträger verbunden ist.

Gemäß einer anderen Ausführungsform der Erfindung kann vorgesehen sein, daß die Kugelpfanne einstückig ausgebildet ist und daß eine Anschlußplatte an die Kugelpfanne angeformt ist.

Die Erfindung betrifft weiters ein Verfahren zum Abkuppeln eines Anhängers von einem Zugfahrzeug, insbesondere einem Ackerschlepper, wobei der Anhänger mit einer auf einem Kupplungsträger des Zugfahrzeuges angeordneten Kupplungskugel und einer die Kupplungskugel von oben umfassenden, anhängerseitigen Kugelpfanne gekuppelt ist.

Weitere Aufgabe der Erfindung ist es, ein Verfahren der oben genannten Art anzugeben, bei dem ein unbeabsichtigtes Abheben der Kugelpfanne, insbesondere im Betrieb der Kupplungsvorrichtung verhindert wird.

Erfindungsgemäß wird dies dadurch erreicht, daß ein Niederhalter durch ein Lösen einer Stecksicherung freigegeben wird, bevor der Niederhalter von der Kugelpfanne weggeschwenkt und die Kugelpfanne von der Kupplungskugel abgehoben wird.

Die Erfindung betrifft weiters ein Verfahren zum Ankuppeln eines Anhängers an ein Zugfahrzeug, insbesondere einen Ackerschlepper, wobei der Anhänger mit einer auf einem Kupplungsträger des Zugfahrzeuges angeordneten Kupplungskugel und einer die Kupplungskugel von oben umfassenden, anhängerseitigen Kugelpfanne kuppelbar ist.

Weitere Aufgabe der Erfindung ist es, ein Verfahren der oben genannten Art anzugeben, bei dem ein unbeabsichtigtes Abheben der Kugelpfanne, insbesondere im Betrieb der Kupplungsvorrichtung verhindert wird.

Erfindungsgemäß wird dies dadurch erreicht, daß ein Niederhalter gegen die aufgesetzte Kugelpfanne geschwenkt und gesichert wird.

In der Zeichnung ist der Erfindungsgegenstand beispielsweise dargestellt. Es zeigen
- Fig. 1: den zugfahrzeugseitigen Teil einer erfindungsgemäßen Kupplungsvorrichtung in einer stirnseitigen, zum Teil aufgerissenen Ansicht,
- Fig. 2: die Kupplungsvorrichtung mit der die Kupplungskugel von oben umgreifenden Kugelpfanne in einem Schnitt nach der Linie II-II der Fig. 1 und
- Fig. 3: die Kugelpfanne mit einer angegossenen Anschlußplatte in einer Untersicht in einem größeren Maßstab.

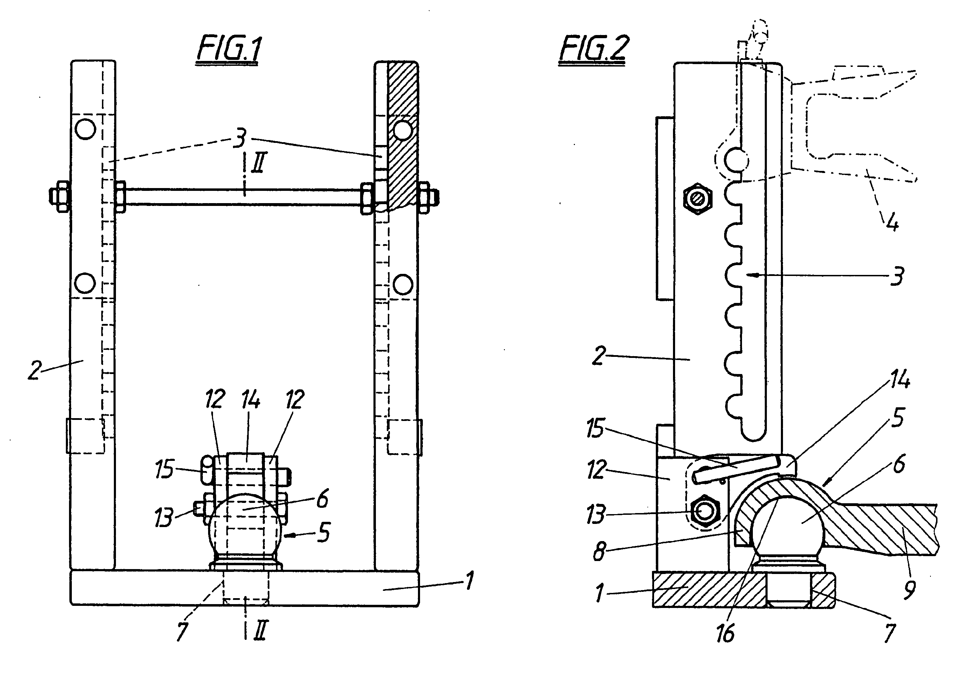

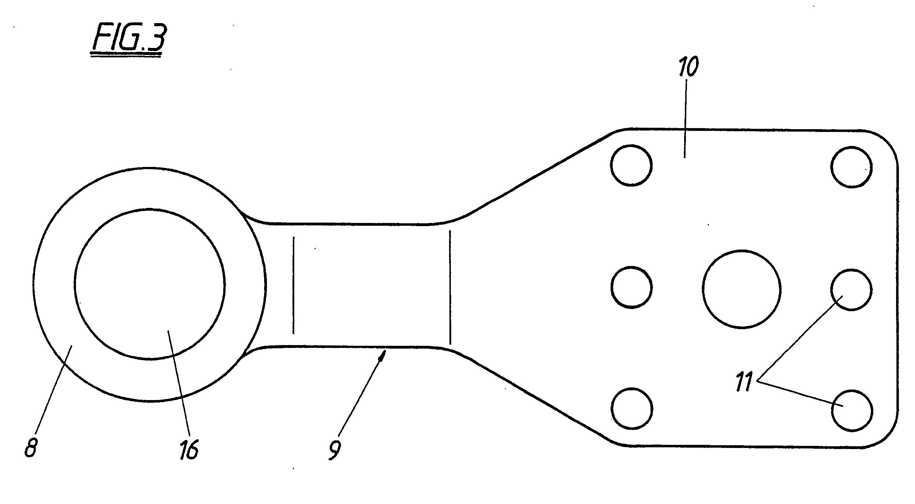

Wie den Fig. 1 und 2 zu entnehmen ist, wird der zugfahrzeugseitige Kupplungsträger 1 von einem in herkömmlicher Weise an einen Ackerschlepper anschließbaren Anbaurahmen 2 gebildet, der eine Vertikalführung 3 für eine der Höhe nach verstellbare und in den einzelnen Höhenstellungen verriegelbare Anhängekupplung 4 herkömmlicher Bauart aufweist, wie dies in der Fig. 2 strichpunktiert angedeutet ist. Neben dieser herkömmlichen Anhängekupplung 4 ist eine wahlweise einsetzbare Kupplungsvorrichtung 5 mit einer Kupplungskugel 6 aus gehärtetem Stahl vorgesehen, die in eine Aufnahmebohrung 7 des Kupplungsträgers 1 eingesetzt ist. Diese Kupplungskugel 6 wirkt mit einer anhängerseitigen Kugelpfanne 8 zusammen, die von einem Gußkörper 9 aus Stahl gebildet wird. Dieser Gußkörper 9 bildet jedoch nicht nur die Kugelpfanne 8, sondern auch eine Anschlußplatte 10 für die Kugelpfanne 8, wie dies die Fig. 3 zeigt. Mit Hilfe dieser Anschlußplatte 10 kann die Kugelpfanne 8 beispielsweise an einer Deichsel eines Anhängers befestigt werden, und zwar mit Hilfe von Schrauben, für die in der Anschlußsplatte 10 Durchtrittslöcher 11 vorgesehen sind.

Um die von oben auf die Kupplungskugel 6 aufgesetzte Kugelpfanne 8 in dieser Kupplungsstellung verriegeln zu können, ist ein in einem Lagerbock 12 um eine Achse 13 verschwenkbarer Niederhalter 14 vorgesehen, der mit Hilfe einer Stecksicherung 15 in der Kupplungsstellung gesichert werden kann. Zum Abkuppeln des Anhängers ist demnach zunächst der Niederhalter 14 durch eine Lösen der Stecksicherung 15 freizugeben, bevor der Niederhalter 14 von der Kugelpfanne weggeschwenkt und die Kugelpfanne 8 von der Kupplungskugel 6 abgehoben werden kann. Beim Ankuppeln des Anhängers ist in umgekehrter Reihenfolge der Niederhalter 15 gegen die aufgesetzte Kugelpfanne 8 zu verschwenken und zu sichern.

Der Gußkörper 9 weist zumindest auf der der Kupplungskugel 6 zugekehrten Pfanneninnenseite 16 eine Gußhaut auf, die für die angestrebte Abtragung großer Stütz- und Anhängelasten von der Kugelpfanne 8 auf die Kupplungskugel 6 in Zusammenhang mit der Ausbildung der Kugelpfanne 8 als Gußkörper von ausschlaggebender Bedeutung ist. Erst durch den über eine Gußhaut auf der Kupplungskugel 6 abgestützten Gußkörper 9 wird die Abtragung der sich beispielsweise bei landwirtschaftlichen Anhängern ergebenden großen Stütz- und Anhängelasten bei vergleichsweise kleinen Kugeldurchmessern möglich.

Es braucht wohl nicht besonders hervorgehoben zu werden, dass die Erfindung nicht auf das dargestellte Ausführungsbeispiel beschränkt ist. So kann der Kupplungsträger 1 unmittelbar am Zugfahrzeug vorgesehen sein. Außerdem kann die Verriegelung der Kupplungsstellung der Kupplungsvorrichtung 5 unterschiedlich konstruktiv ausgeführt sein, weil es ja lediglich darauf ankommt, ein unbeabsichtigtes Abheben der Kugelpfanne 8 von der Kupplungskugel 6 zu verhindern.

Besteht die Kugelpfanne aus einem zumindest auf der Pfanneninnenseite eine Gußhaut aufweisenden Gußkörper aus einem Eisenwerkstoff, so können von der Kupplungsvorrichtung große Stütz- und Anhängelasten aufgenommen werden, ohne den Kugeldurchmesser vergrößern zu müssen.

Durch das Vorsehen eines Gußkörpers als Kugelpfanne konnte in überraschender Weise die Belastbarkeit der Kupplungsvorrichtung durch Stütz- und Anhängelasten unter der Bedingung entscheidend verbessert werden, daß sich der Gußkörper über eine Gußhaut auf der stählernen Kupplungskugel abstützt. Diese Gußhaut bildet offensichtlich eine Zwischenschicht, die die Kraftübertragungsverhältnisse zwischen der Kupplungskugel und dem Gußkörper der Kugelpfanne so beeinflußt, daß eine Überlastung des Gußkörpers der Kugelpfanne auch bei großen Stütz- und Anhängelasten ausgeschlossen werden kann. So konnten über erfmdungsgemäße Kupplungsvorrichtungen mit einem Kugeldurchmesser von 80 mm Stützlasten bis zu 5,5 t und Anhängelasten bis zu 60 t ohne Überlastung der Kupplungsvorrichtung aufgenommen werden.

Besonders vorteilhafte Belastungsverhältnisse können dann erreicht werden, wenn die Kugelpfanne eine um 5 bis 12 HRC geringere Härte als die Kupplungskugel aus gehärtetem Stahl aufweist. Bei einem Härteunterschied von 6 HRC konnten für die üblichen Einsatzgebiete optimale Bedingungen für die Lastabtragung über die Kupplungsvorrichtung sichergestellt werden.

Um für die aus einem Gußkörper gebildete Kugelpfanne einfache Anschlußmöglichkeiten beispielsweise an der Deichsel des Anhängers zu schaffen, kann der Gußkörper die Kugelpfanne mit einer Anschlußplatte bilden, die an der Deichsel unabhängig von der jeweiligen Deichselkonstruktion festgeschraubt werden kann.

## Patentansprüche

1. Kupplungsvorrichtung zwischen einem Zugfahrzeug, insbesondere einem Ackerschlepper, und einem Anhänger mit einer auf einem Kupplungsträger (1) des Zugfahrzeuges angeordneten Kupplungskugel (6) und einer die Kupplungskugel (6) von oben umfassenden, anhängerseitigen Kugelpfanne (8), **dadurch gekennzeichnet, daß** ein in einen Lagerbock (12) um eine Achse (13) verschwenkbarer und in einer Kupplungsstellung verriegelbarer Niederhalter (14) vorgesehen ist.

2. Kupplungsvorrichtung nach Anspruch 1, **dadurch gekennzeichnet, daß** der Niederhalter (14) mit einer Stecksicherung (15) in der Kupplungsstellung sicherbar ist.

3. Kupplungsvorrichtung nach Anspruch 1 oder 2, **dadurch gekennzeichnet, daß** der Lagerbock (12) mit dem Kupplungsträger (1) verbunden ist.

4. Kupplungsvorrichtung nach Anspruch 1, 2 oder 3, **dadurch gekennzeichnet, daß** die Kugelpfanne (8) einstückig ausgebildet ist und daß eine Anschlußplatte (10) an die Kugelpfanne (8) angeformt ist.

5. Verfahren zum Abkuppeln eines Anhängers von einem Zugfahrzeug, insbesondere einem Ackerschlepper, wobei der Anhänger mit einer auf einem Kupplungsträger des Zugfahrzeuges angeordneten Kupplungskugel und einer die Kupplungskugel von oben umfassenden, anhängerseitigen Kugelpfanne gekuppelt ist, **dadurch gekennzeichnet, daß** ein Niederhalter (14) durch ein Lösen einer Stecksicherung (15) freigegeben wird, bevor der Niederhalter (14) von der Kugelpfanne (8) weggeschwenkt und die Kugelpfanne (8) von der Kupplungskugel (6) abgehoben wird.

6. Verfahren zum Ankuppeln eines Anhängers an ein Zugfahrzeug, insbesondere einen Ackerschlepper, wobei der Anhänger mit einer auf einem Kupplungsträger des Zugfahrzeuges angeordneten Kupplungskugel und einer die Kupplungskugel von oben umfassenden, anhängerseitigen Kugelpfanne kuppelbar ist, **dadurch gekennzeichnet, daß** ein Niederhalter (15) gegen die aufgesetzte Kugelpfanne (8) geschwenkt und gesichert wird.
